# EUROPEAN PATENT APPLICATION

(11) **EP 0 767 286 A2**
(43) Date of publication of application: **09.04.1997**
(21) Application number: 96115215.4
(22) Date of filing: 23.09.1996
(51) Int. Cl.: E05B 49/00, B60R 25/04

(54) **Remote keyless entry and immobilization system for automotive use**

(30) Priority: 02.10.1995 US 537582
(71) Applicant: MOTOROLA, INC., Schaumburg, IL 60196 (US)
(72) Inventor: Davis, Benjamin R., Chandler, Arizona 85226 (US); Potyka, Richard, Mesa, Arizona 85203 (US)
(74) Representative: Spaulding, Sarah Jane

(57) **Abstract**

A remote keyless entry and immobilization system for a vehicle is described. A key is capable of two way communication with microprocessor control unit (MCU) (62) of a vehicle. The key transmits at two different frequencies. A high frequency transmission is used for remote operation such as opening and closing the door locks. A low frequency transmission is used when the key is inserted in the ignition lock of the vehicle for two way communication between the automobile and the key. No microprocessors are used in the key circuit. The transmissions are encrypted to prevent theft. Battery life is extended on the remote keyless entry and immobilization system by using the low frequency transmission sent by the vehicle to charge a capacitor (54) and to recharge a battery (52). The capacitor powers circuitry of a key circuit (41).

## Description

### Background of the Invention

This invention relates, in general, to automobiles, and more particularly, to remote keyless entry and immobilization systems for automotive vehicles.

The pervasive use of electronics in an automobile is increasing to every facet of automobile operation. For example, electronics manage everything from the operation of the automobile drive train to the climate within the automobile cabin. One system that was initially developed by the automobile accessory aftermarket is a remote keyless entry system. The remote keyless entry system is a transmitter circuit that controls the door lock system of an automobile from a remote location. For example, the doors or trunk can be locked or unlocked as a person walks towards or away from a vehicle by pressing an activation button on a transmitter. The transmitter is typically built in a small plastic housing that is attached to a key chain which easily fits in a pocket or purse. A receiver circuit is installed within the car for purposes of receiving the transmitted signal and enabling or disabling the lock system.

Another system being mandated for automobiles in Europe is an immobilization system that disables an automobile. For example, one immobilization system being proposed utilizes a specific code entered by a key to the automobile. Each code is specific to one vehicle and the code could be a number greater than one trillion thereby reducing a chance that a random code could be entered. If the code entered by the key matches the code stored in the computer system of the vehicle, the vehicle is then enabled for use. If the automobile is "hot wired" for use without the code being entered the vehicle's fuel pump, fuel injectors, spark, transmission, and steering could be disabled thereby rendering the vehicle inoperable.

It would be of great benefit if a system could be developed that combines both remote keyless entry with an immobilization with increased security while reducing the number of components required in manufacture.

### Brief Description of the Drawings

FIG. 1 is an illustration of a key for transmitting information to a Microprocessor Control Unit (MCU) of an automobile in accordance with the present invention;
FIG. 2 illustrates components within an automobile for remote keyless entry and immobilization verification in accordance with the present invention;
FIG. 3 is a block diagram of a key circuit housed in a key for a remote keyless entry and immobilization system in accordance with the present invention; and
FIG. 4 is a block diagram of an interface circuit and microprocessor control unit for a vehicle in accordance with the present invention.

### Detailed Description of the Drawings

A remote keyless entry system for an automobile is typically housed in a small plastic case. The small plastic case is usually part of a key chain and is shaped to fit between the thumb and forefinger. The thumb is used to depress a button for activating the device. The plastic case is non-ideal because the hand holding the device impedes transmission of a signal. A code, is transmitted by the transmitter within the plastic case which is received and verified by a receiver located in the automobile and coupled to the electro-mechanical locking system. Other, more specific information, such relating to which door locks are being opened or closed as well as information isolating a particular lock (for example, the trunk lock) is included in a transmission.

In general, a remote keyless entry system includes a microprocessor and some form of nonvolatile memory, for example Electrically Erasable Programmable Read Only Memory (EEPROM) or flash memory besides the transmitter and receiver. The microprocessor or microcontroller controls the operation of a remote keyless entry system. A non-volatile memory is used to store the code unique to each device as well as software for operation. A read/write non-volatile memory allows the code to be written to the unit at any time or to be changed at a later date. Both a microprocessor and non-volatile memory are expensive components of a remote keyless entry system which increases manufacturing costs.

Security is an issue for remote keyless entry systems because the code required for opening doors of a vehicle is broadcasted. If a signal is broadcast, it can be intercepted by someone. One skilled in the art of remote keyless entry systems would be able to use the intercepted transmission to open and gain entry into the automobile to aid in a theft. Similarly, an immobilization system that utilizes a fixed code to enable an automobile would not be suitable for integration with a remote keyless entry system due to the possibility of code interception during transmission.

Another factor in transmitter based activation systems for automobiles is that they are battery operated. A transmitter circuit depletes a battery in a short time and requires constant battery replacement. Furthermore, the transmission distance is reduced as the battery weakens creating a situation where an automobile may not be locked when the device is activated (depending on the distance from the vehicle); where it would have been locked with fully charged batteries. Automobile manufacturers would like to insure at least a ten year battery life on a remote keyless entry and immobilization system with little or no degradation in transmitting distance under normal operation. A battery life of ten years is not achievable with current battery technology.

A remote keyless entry and immobilization system that maximizes transmission distance, overcomes security issues, and has an extended battery life is disclosed herein. Transmission distance is maximized by building an antenna that is not shielded by the hand during operation. Security is insured by using an encryption base code system which is unique for each operation. The key's battery life is extended by charging the battery each time the key is used in the ignition lock and the vehicle is operated. Cost is reduced by eliminating the use of a dedicated microcontroller in the transmitting element of the key and utilizing the existing automotive microcontroller in the automobile.

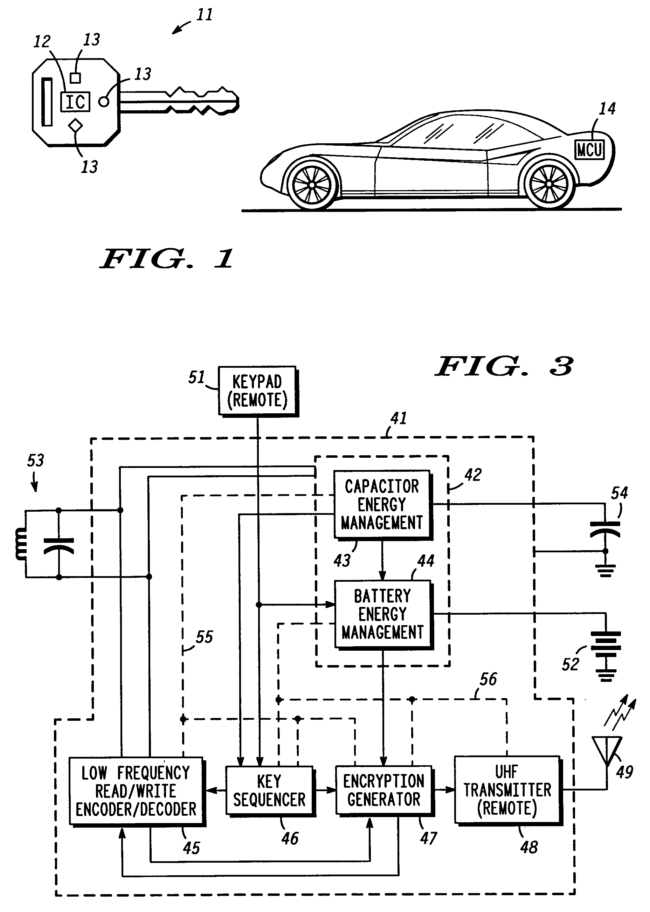

FIG. 1 is an illustration of a key 11 forming a transmitter section of a remote keyless entry and immobilization system. In the preferred embodiment, the remote keyless entry and immobilization system is built for Original Equipment Manufacturers (OEM) for incorporation into the electronics of an automobile. The transmitter section is an integrated circuit 12 that is housed in the handle portion of key 11. In the preferred embodiment, key 11 is an ignition key of an automobile. Control buttons 13 are placed on a handle portion of key 11. Control buttons 13 enable and disable such functions as the driver door lock, passenger door locks, trunk release, and panic/alarm. The portion of key 11 that fits into a mechanical lock is an antenna for the transmitter section. Note that the antenna is not obstructed when a button is pressed which allows a maximum radiation pattern for reception by an automobile 14.

As mentioned previously, prior art immobilization systems are designed to input a code to the automobile which enables engine functions such as the fuel pump, fuel injectors, spark, transmission, and steering. If a theft occurs and the code has not been entered to the Microprocessor Control Unit (MCU) the automobile will be disabled by the MCU immediately or a short time period after the theft. Arming a fixed code based immobilization system via a transmitter is not secure because the fixed code could be intercepted and used to enable the automobile.

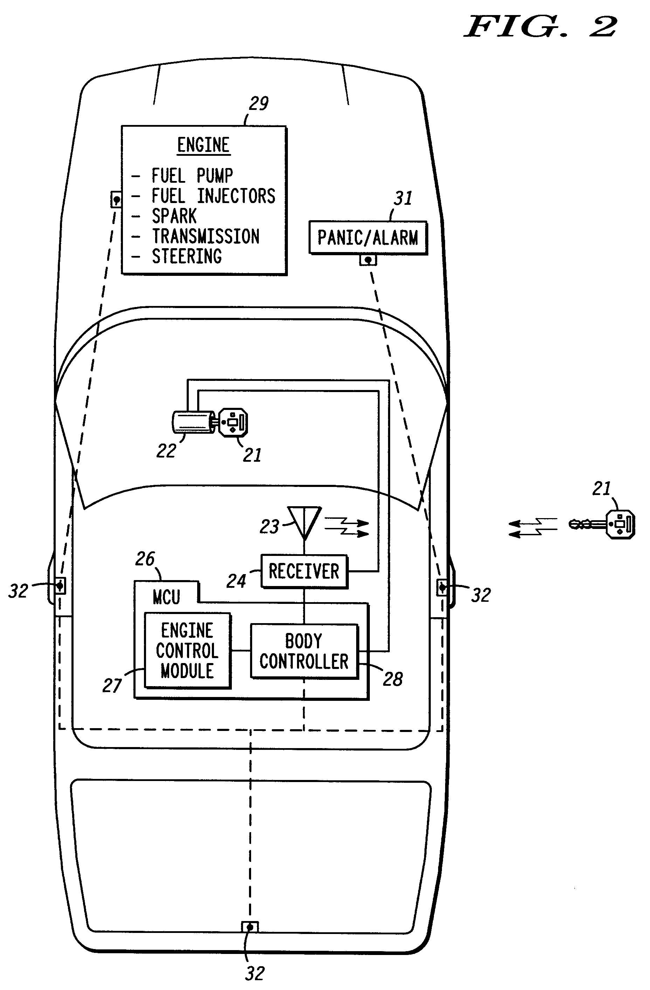

FIG. 2 is a diagram illustrating components of a remote keyless entry/immobilization system for an automobile. Keys 21 activate the system either remotely or when coupled to an ignition lock 22. An antenna 23 in the automobile receives transmissions from key 21. Antenna 23 couples to a receiver circuit 24 and a MCU 26. MCU 26 is an electronic processor for controlling various operational aspects of the automobile. In the preferred embodiment, MCU 26 comprises an Engine Control Module 27 and a Body Control Module 28. Engine Control Module 27 monitors and controls an engine. Engine Control Module 27 controls such functions as the fuel pump, fuel injectors, ignition system, transmission, and steering which are used in the immobilization system to disable the car in the event of a theft. Body Controller 28 operates panic/alarm 31 and door and trunk locks 32.

In the preferred embodiment, keys 21 transmit information to the automobile via an Ultra-High Frequency (UHF) 315 Megahertz carrier frequency. Keys 21 are capable of transmitting a code to a receiver in a vehicle across distances of 10 meters or more. A transmitted signal from keys 21 is encrypted to maintain security. The encryption prevents someone from receiving a transmission and using it to enable an automobile for normal operation due to the fact that the transmitted code changes with each transmission. For example, a vehicle owner uses a remote keyless entry/immobilization system to arm the system and lock the car upon arriving at a destination. A thief receives the transmission in the hope that the received transmission can be reapplied to the system to enable the car for normal operation. An encrypted code changes with each transmission. The received transmission cannot be reapplied to the automobile to open the vehicle locks or disarm the engine immobilization system since the automobile is looking to receive a different code.

One type of encryption technique that is applicable to the remote keyless entry/immobilization system utilizes a polynomial algorithm for generating transmitted codes. The polynomial algorithm uses a previous code to generate a next code to be received. Thus, a polynomial algorithm provides excellent protection because the current code is generated from all the previous codes. Even if someone had the polynomial algorithm they could not generate the current code unless they also had the initialization code or seed code that started the code sequence. Moreover, the number of different possible codes is made large enough (for example, trillions of combinations) to make a random choice of a code an improbable event. Also, an exhaustive approach of sending codes until the appropriate code is found is not feasible due to the large number of codes and the time required.

Remote operation of keys 21 is a one way communication with keys 21 transmitting information and a receiver 24 within the automobile receiving the information and acting on the instructions contained therein. Keys 21 when placed in ignition lock 22 receives and transponds (transmit reply) information from MCU 26. Ignition lock 21 includes a switch that is enabled when a key turns ignition lock 21 for starting the automobile or otherwise senses the key. The automobile is immobilized by Engine Control Module 27 until MCU 26 has sent keys 21 new information and keys 21 has transponded with a code output that is verified or confirmed valid by MCU 26. Once verified, Engine Control Module 27 enables the fuel pump, fuel injectors, ignition system, transmission, starter, etc. allowing a driver to use the automobile.

In the preferred embodiment, communication between MCU 26 and keys 21 (when placed in the ignition lock) is accomplished via a low frequency transmission over a very limited distance (typically 10 centimeters). A transmission frequency of approximately 125 kilohertz is used. The low frequency transmission energy is also used to power the integrated circuit in keys 21. Inductive coupling is used to transmit and receive the 125 kilohertz signal.

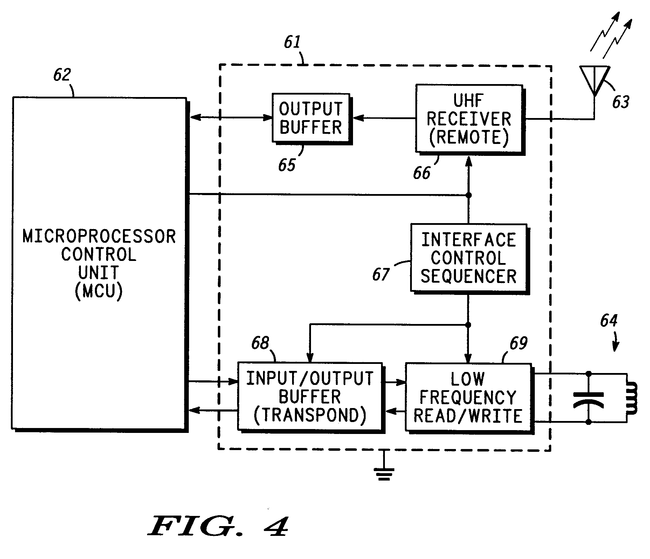

FIG. 3 is a block diagram of a key circuit 41 for remote keyless entry and immobilization verification. Key circuit 41 is incorporated in an ignition key of a vehicle. Cost savings specific to key circuit 41 is that no microprocessor or EEPROM memory are used which is typical to prior art remote keyless entry systems. Key circuit 41 comprises a power management circuit 42, a low frequency read/write encoder/decoder circuit 45, a key sequencer circuit 46, an encryption generator circuit 47, and a UHF transmitter circuit 48. The encryption generator circuit serves a common function for both remote keyless entry and immobilization features. Other peripheral elements that are incorporated with the key are a UHF antenna 49, a keypad 51, a battery 52, a low frequency antenna 53, and a capacitor 54.

In the preferred embodiment, UHF antenna 49 is the metal blade of the key that fits into the ignition lock of the vehicle. Keypad 51 is incorporated in the handle portion of the key. Keypad 51 are buttons or switches that are depressed for sending instructions for remote operation such as locking/unlocking the trunk, all doors, or just the driver door of the vehicle. Battery 52 is a battery housed in the key for powering key circuit 41 for remote operation only. Low frequency antenna 53 couples key circuit 41 to a microprocessor control unit (MCU) of the vehicle when the key is inserted in ignition switch and turned to start the vehicle. A secondary function of low frequency antenna 53 is to charge capacitor 54 via the low frequency transmission from the automobile. Capacitor 54 is used to store short duration charge, power key circuit 41, and recharge battery 52.

Key circuit 41 is capable of transmitting control signals for remote operation and also two way communication between key circuit 41 and the MCU of the automobile when the key is inserted in the ignition lock. Key sequencer 46 is connected to keypad 51 and provides control signals for remote operation to circuitry of key circuit 41. Encryption generator 47 is connected to key sequencer 46 and provides an encrypted code to validate the key to the automobile. UHF transmitter 48 is connected to encryption generator 48 for remotely sending the encrypted code. UHF transmitter 48 is connected to UHF antenna 49 and transmitted at UHF frequencies. In the preferred embodiment, a UHF frequency of 315 megahertz is used.

Low frequency read/write encoder/decoder circuit 45 is connected to encryption generator 47 for two way processing of information. Low frequency read/write encoder/decoder circuit 45 encodes and decodes information for low frequency transmission when the key is inserted in the ignition lock of the automobile. Low frequency antenna 49 is connected to low frequency read/write encoder/decoder circuit 45. In the preferred embodiment, low frequency antenna is tuned for a frequency of 125 kilohertz.

Power management circuit 42 controls how power is applied to key circuit 41. Power management circuit 42 comprises capacitor energy management circuit 43 and battery energy management circuit 44. Low frequency antenna 53 is connected to capacitor energy management circuit 43 for charging capacitor 54 with a transmission from the automobile. Capacitor energy management circuit 43 couples capacitor 54 to power key circuit 41 when the key is inserted in the ignition lock of the automobile. Capacitor 54 powers low frequency read/write encoder/decoder circuit 45, key sequencer 46, and encryption generator 47 as indicated by dashed power lines 55 from capacitor energy management circuit 43.

Battery energy management circuit 44 is connected to battery 52, keypad 51, capacitor energy management circuit 43, and encryption generator 47. Battery energy management circuit 44 powers key circuit 41 when a key of keypad 51 is depressed for remote operation. Battery energy management circuit 44 couples battery 52 to key sequencer 46, encryption generator 47, and UHF transmitter 48 as indicated by dashed power lines 56.

Battery energy management circuit 44 senses the voltage of battery 52 and provides a status signal to encryption generator 47 when the battery voltage is low. Encryption generator 47 and low frequency read/write encoder/decoder circuit 45 signal the MCU of the automobile that battery 52 requires charging when the key is inserted in the ignition lock. In the preferred embodiment, the automobile sends a preamble to a transmission that is stored on capacitor 54 and coupled to battery 52 through capacitor energy management circuit 43 and battery energy management circuit 44.

FIG. 4 is a block diagram of an interface circuit 61 in an automobile for validating a key code or remote key operation for activating portions of the automobile. A microprocessor control unit (MCU) 62 resides in most newer automobiles for controlling vehicle operation. Antenna 63 receives transmissions from keys remotely operated. Low frequency antenna 64 transmits energy and information and receives information from a key inserted in the ignition lock of the automobile.

Interface circuit 61 comprises an output buffer 65, a UHF receiver 66, an interface control sequencer 67, an input/output buffer 68, and a low frequency read/write circuit 69. Interface control sequencer 67 controls operation of interface circuit 61 and more specifically handles the transfer of information with MCU 62. UHF antenna connects to UHF receiver 66 and receives transmissions from remotely operated keys. UHF receiver 66 receives information transmitted remotely from a key and connects to output buffer 65. Microprocessor 62 may not immediately respond to a transmission since it is also in control of many other functions. Output buffer 65 connects to MCU 62 and stores the transmission received from UHF receiver 66 until MCU 62 is capable of receiving and responding to the transmission. Interface control sequencer 67 is connected to UHF receiver 66 and MCU 62. Interface control sequencer 67 and MCU 62 are responsive to one another thereby insuring the transmission stored in output buffer 65 is successfully provided to MCU 62.

Two way communication between a key and an automobile occurs when the key is inserted in the ignition lock of the automobile. Both the key and the automobile transmit at a low frequency. Low frequency antenna 64 transmits and receives a low frequency signal. Low frequency antenna 64 is connected to low frequency read/write circuit 69. Interface control sequencer 67 provides control signals to low frequency read/write circuit 69 and input/output buffer 68 for controlling the transfer of information. Input/output buffer 68 is connected between MCU 62 and low frequency read/write circuit 69. Input/output buffer 68 stores information until it is coupled to either MCU 62 or low frequency antenna 64.

Operation of a remote keyless entry and immobilization system is best described using the block diagrams of FIG. 3 and FIG. 4. Referring to FIG. 4, remote operation is started when a key of keypad 51 is depressed. Battery energy management circuit 44 is enabled for coupling battery 52 to key sequencer 46, encryption generator 47, and UHF transmitter 48. Key sequencer 46 provides control signals for the operation of key circuit 41 to output an instruction to enable the automobile to perform a task corresponding to the depressed key of keypad 51. Encryption generator 47 provides an encrypted code for validating a remote operation. The encrypted code is valid only for the current transmission. The automobile expects a different code for the next operation. The encrypted code and instruction is transmitted by UHF transmitter 48 and UHF antenna 49.

Referring to FIG. 4, the transmission from the key is received by UHF antenna 63. Low frequency read/write circuit 69 receives the transmission and outputs the transmission to input/output buffer 68. Interface control sequencer 67 interfaces with MCU 62 to download the transmission. Once MCU 62 has the transmission, the encrypted code is verified, if correct the instruction is acted on (for example, locking all doors), if incorrect the instruction is ignored.

Referring to FIGs. 3 and 4, a second type of operation occurs when the key is inserted in the ignition lock of the automobile. In the preferred embodiment, the key is turned to enable starting of the automobile. A switch is activated in the ignition lock as it is turned that prompts MCU 62. MCU 62 sends a transmission for starting communication through input/output buffer 68, low frequency read/write circuit 69, and low frequency antenna 64. Power management circuit 42 senses the transmission and couples capacitor 54 for being charged by the transmission. Capacitor 54 is coupled via capacitor energy management circuit 43 to power low frequency read/write encoder/decoder circuit 45, key sequencer 46, and encryption generator 47.

Encryption generator 47 provides an encrypted code to low frequency read/write encoder/decoder circuit 45 which is then transmitted to interface circuit 61 via low frequency antenna 53. Low frequency antenna 64 receives the transmission from the key which is coupled to low frequency read/write circuit 69. The transmission is then stored in input/output buffer 68 for porting to MCU 62. MCU 62 confirms the validity of the encrypted code sent by the key. If the encrypted code is valid, MCU 62 allows the car to be started by enabling systems such as the starter, ignition system, and fuel system.

In the preferred embodiment, MCU 62 provides a new seed code for the encryption polynomial stored in encryption generator 47. The new seed code allows a new sequence of encrypted codes to be generated with each remote usage. Changing the seed code on a regular basis decreases the possibility of anyone duplicating the changing codes. The new seed code and an encrypted code is sent by MCU 62 and stored in input/output buffer 68. Low frequency read/write circuit 69 transmits the seed code and encrypted code to the key via low frequency antenna 64. Low frequency antenna 53 receives the transmission which is coupled to low frequency read/write encoder/decoder circuit 45. Low frequency read/write encoder/decoder circuit 45 provides the transmission to encryption generator 47 where the encryption code is validated and the new seed code replaces the old seed code.

Battery energy management circuit 44 senses a battery voltage and provides a battery status signal to encryption generator 47. A battery status signal indicating battery 52 be recharged causes encryption generator 47 to send the status to the automobile. Low frequency read/write encoder/decoder circuit 45 couples the information to low frequency antenna 53. Interface circuit 61 receives the information pertaining to the low battery voltage and transmits a "preamble" back to the key that provides energy to capacitor energy management circuit 43 for charging capacitor 54 and battery 52.

By now it should be appreciated that a remote keyless entry and immobilization system for an automobile has been described. A key of the remote keyless entry and immobilization system does not require a microprocessor circuit or non-volatile memory thereby decreasing manufacturing costs. The system utilizes high frequency transmissions for remote operation and a low frequency transmission for communication between a key and an automobile when the key is inserted in the ignition lock. Transmissions are encrypted which significantly reduces the chance of theft and allows the immobilization system to be integrated into the key. The key is powered by battery and a capacitor which receives energy from the low frequency transmission from the automobile. Charging the battery via the low frequency transmission extends battery life so as to be able to attain a ten year life cycle that automobile manufacturers want.

While specific embodiments of the present invention have been shown and described, further modifications and improvements will occur to those skilled in the art. It is understood that the invention is not limited to the particular forms shown and it is intended for the appended claims to cover all modifications which do not depart from the spirit and scope of this invention.

## Claims

1. A remote keyless entry and immobilization system for a vehicle wherein communication between a key (11) and the vehicle includes an encrypted code that changes with each transmission thereby protecting the vehicle from being enabled for use with a stolen transmission.

2. The remote keyless entry and immobilization system as recited in claim 1 wherein said key includes a low frequency antenna (64) for transmitting and receiving information to a microprocessor control unit (MCU) (62) of the vehicle when said key (11) is inserted in an ignition lock of the vehicle.

3. The remote keyless entry and immobilization system as recited in claim 2 wherein a blade portion of said key (11) is a ultra high frequency (UHF) antenna for remote transmission of information.

4. A remote keyless entry and immobilization system for a vehicle comprising:
a key circuit (41) housed in a key for transmitting and receiving information, said key circuit (41) comprising:
a key sequencer (46);
a low frequency read/write encoder/decoder circuit (45) responsive to said key sequencer (46) for communicating to a microprocessor control unit (26) (MCU) of the vehicle;
an encryption generator (47) responsive to said key sequencer (46) for encrypting a code, said encryption generator (47) being coupled to said low frequency read/write encoder/decoder circuit (45); and
an ultra high frequency (UHF) transmitter (48) responsive to said encryption generator (47) for remotely transmitting information from said key.

5. The remote keyless entry and immobilization system as recited in claim 4 wherein said key further includes:
a keypad (51) coupled to said key sequencer (46);
a Ultra High Frequency (UHF) antenna (49) coupled to said UHF transmitter (48); and
a low frequency antenna (53) coupled to said low frequency read/write encoder/decoder circuit (45) for receiving and transmitting information when said key is inserted in an ignition lock for starting the vehicle.

6. The remote keyless entry and immobilization system as recited in claim 5wherein said key further includes:
a battery (52); and
a capacitor (54);
and wherein said key circuit (41) further includes:
a capacitor energy management circuit (43) coupled to said capacitor (54) and said low frequency antenna (53), said capacitor energy management circuit (43) coupling said capacitor (54) to said low frequency read/write encoder/decoder circuit (45), said key sequencer (46), and said encryption generator (47) for providing power when said key is inserted in said ignition lock of the vehicle and wherein a transmission from the automobile to said low frequency antenna (53) is controlled by said capacitor energy management circuit (43) for charging said capacitor (54); and
a battery energy management circuit (44) coupled to said battery (52), said capacitor energy management circuit (43), said key sequencer (46), said encryption generator (47), and said UHF transmitter (48), said battery energy management circuit (44) coupling power from said battery (52) to said key sequencer (46), said encryption generator (47), and said UHF transmitter (48) when a key of said keypad is enabled, said battery energy management circuit (44) providing a status signal for indicating when a battery voltage is low.

7. The remote keyless entry and immobilization system as recited in claim 6 wherein the vehicle includes:
a Microprocessor Control Unit (MCU) (62);
an Ultra High Frequency (UHF) Antenna (63) for receiving transmissions from said key;
an UHF receiver (66) responsive to said UHF antenna (63);
an output buffer (65) responsive to said UHF receiver (66) for storing and providing transmissions from said key to said MCU (62);
a low frequency antenna (64) for receiving and transponding to said key when said key is inserted in said ignition lock for starting said vehicle;
a low frequency read/write circuit (69) responsive to said low frequency antenna (64);
an input/output buffer (68) for storing and providing data to said MCU (62) and said low frequency read/write circuit (69); and
an interface control sequencer (67) responsive to said MCU (62) for controlling when data is provided by said output buffer (65) to said MCU (62) and for controlling data flow from said input/output buffer (68) between said MCU (62) and said low frequency read/write circuit (69).

8. A method for combining a vehicle remote keyless entry system and a vehicle immobilization system, the method comprising a step of:
encrypting transmissions between the vehicle and a key (11) such that a different code is required with each transmission wherein a stolen transmission resent to the vehicle does not unlock and enable the vehicle for use.

9. The method as recited in claim 8 said step encrypting transmissions includes a step of:
sending an encrypted transmission to the vehicle via an Ultra High Frequency (UHF) signal.

10. The method as recited in claim 8 said step of encrypting transmission includes a step of:
providing two way encrypted communication between said key (11) and the vehicle when the key is inserted to an ignition lock for starting the vehicle.
